# FASCICULE DE BREVET EUROPEEN

(11) **EP 0 544 562 B1**
(45) Date de publication et mention de la délivrance du brevet: **11.09.1996**
(21) Numéro de dépôt: 92403103.2
(22) Date de dépôt: 18.11.1992
(51) Int. Cl.: B65D 81/26, B29C 51/12, B65D 1/34

(54) **Procédé et installation de fabrication de barquettes pour le conditionnement de produits alimentaires et barquettes obtenues par ce procédé**
Verfahren und Anlage zur Herstellung von Schalen zur Lebensmittelverpackung und mit diesem Verfahren hergestellte Schalen
Process and installation for producing trays used for packaging edible products and trays obtained by this process

(30) Priorité: 28.11.1991 FR 9114729
(43) Date de publication de la demande: 02.06.1993
(73) Titulaire: VITEMBAL, F-30210 Remoulins (FR)
(72) Inventeur: Julien, Luc, F-30400 Villeneuve les Avignon (FR)
(74) Mandataire: Lanceplaine, Jean-Claude

(56) Documents cités:
- EP-A- 0 182 139
- EP-A- 0 495 230
- DE-U- 8 801 585
- FR-A- 2 614 877
- FR-A- 2 655 027
- US-A- 3 958 051

## Description

La présente invention a pour objet un procédé et une installation de fabrication de barquettes pour le conditionnement de produits alimentaires rejetant du liquide.

Les barquettes pour le conditionnement, le transport et la présentation de produits alimentaires rejetant du liquide, comme par exemple de la viande, du poisson ou de la volaille, sont généralement formées par thermoformage à partir d'au moins une feuille en matière plastique comme par exemple en polystyrène et comportent une paroi de fond, des bords latéraux et des bords latéraux transversaux.

De plus, pour éviter que le liquide provenant du produit alimentaire se répande dans la barquette et coule hors de celle-ci notamment lorsqu'elle est inclinée, ce type de barquette comporte des moyens d'absorption du liquide.

Ces moyens d'absorption sont le plus souvent constitués par une couche en matériau absorbant, comme par exemple en ouate, disposée sur la paroi de fond de la barquette.

A cet effet, on connaît dans le EP-A-0 182 139, une barquette du type décrit ci-dessus qui comprend, d'une part, un élément de base constitué par deux couches qui forment la paroi de fond, les bords latéraux et les bords latéraux transversaux et qui sont réalisées en une matière synthétique étanche au liquide, et d'autre part, une couche intercalaire absorbante agencée entre les deux couches en matière synthétique.

La couche intercalaire et les deux couches en matière synthétique sont formées à partir de section de même longueur de rubans correspondants et la couche supérieure comporte deux rangées longitudinales parallèles d'ouvertures en forme d'entonnoir.

Les ouvertures sont pratiquées dans la couche supérieure pendant son transport avant l'assemblage avec la couche inférieure.

La couche intercalaire absorbante s'étend sur toute la longueur de la barquette entre les deux bords latéraux transversaux ce qui présente des inconvénients.

En effet, les deux couches en matière synthétique des bords latéraux transversaux de la barquette ne sont pas soudées entre elles au moment du thermoformage compte tenu de la présence de la couche intercalaire absorbante.

De ce fait, ces bords latéraux transversaux ne sont pas étanches si bien que le liquide passe par capillarité entre les bords de la barquette et le film d'emballage et se répand sur le présentoir ou dans le panier de la ménagère.

De plus, les bords latéraux transversaux présentent un manque de rigidité de telle sorte que pendant son transport la barquette à tendance à se plier sous le poids du produit alimentaire qu'elle contient.

Par ailleurs, la présence de la couche intercalaire absorbante entraîne des inconvénients au moment du thermoformage de la barquette.

La couche absorbante présente en effet un faible étirement par rapport à la matière composant les deux autres couches si bien que les cadences de thermoformage sont limitées et la profondeur de la barquette est également limitée.

Enfin, la présence de la couche absorbante sur toute la longueur de la bande dans laquelle les barquettes sont thermoformées, entraîne une consommation et une perte importante de matière absorbante qui est un matériau relativement onéreux et empêche le recyclage des déchets de détourage, étant donné que la matière absorbante n'est pas recyclable.

La présente invention a pour but de proposer un procédé et une installation de fabrication de barquettes pour le conditionnement et le transport de produits alimentaires qui évitent ces inconvénients.

La présente invention a pour objet un procédé de fabrication de barquettes pour le conditionnement de produits alimentaires rejetant du liquide, à partir d'une bande continue comportant au moins une feuille de base en matière plastique comme par exemple en polystyrène, des tampons en matériau absorbant formés à partir d'un ruban continu et posés sur la feuille de base et au moins un film de couverture en matière plastique comme par exemple en polystyrène, procédé dans lequel on forme par thermoformage dans ladite bande continue les barquettes et on découpe lesdites barquettes comportant une paroi de fond, des bords latéraux et des bords latéraux transversaux, caractérisé en ce que :
- on découpe le ruban en matériau absorbant en bandes longitudinales et parallèles,
- on espace transversalement les bandes longitudinales,
- on découpe transversalement lesdites bandes longitudinales pour former les tampons dont les dimensions sont sensiblement égales à celles de la paroi de fond des barquettes,
- on espace longitudinalement lesdits tampons,
- on colle sur la feuille de base en matière plastique les tampons,
- on pose sur toute la surface de la feuille de base munie des tampons régulièrement espacés, le film de couverture pour former la bande continue,
- on perfore le film de couverture,
- et on réalise le thermoformage et le découpage des barquettes.

Selon d'autres caractéristiques de l'invention :
- on perfore le film de couverture simultanément au thermoformage des barquettes,
- on perfore le film de couverture simultanément au découpage des barquettes,
- on projette sur la feuille de base des points de colle selon des lignes discontinues, parallèles et espacées à des intervalles sensiblement égaux à l'espacement des bandes longitudinales et sur des longueurs sensiblement égales aux longueurs des tampons,
- on recycle les déchets de détourage de la bande continue après découpage des barquettes.

La présente invention a également pour objet une installation de fabrication de barquettes pour la mise en oeuvre du procédé, comprenant des moyens de thermoformage et des moyens de découpage des barquettes dans une bande continue comportant au moins une feuille de base en matière plastique comme par exemple en polystyrène, des tampons en matériau absorbant formés à partir d'un ruban continu et posés sur la feuille de base et au moins un film de couverture en matière plastique comme par exemple en polystyrène, caractérisée en ce qu'elle comprend également :
- des moyens de découpage du ruban en matériau absorbant en bandes longitudinales et parallèles,
- des moyens d'espacement transversal des bandes longitudinales,
- des moyens de découpage transversale desdites bandes longitudinales pour former les tampons de dimensions sensiblement égales à celles de la paroi de fond des barquettes,
- des moyens d'espacement longitudinal desdits tampons,
- des moyens de collage des tampons sur la feuille de base,
- des moyens de pose sur toute la surface de la feuille de base munie des tampons régulièrement espacés, du film de couverture afin de former la bande continue,
- et des moyens de perforation du film de couverture.

Selon d'autres caractéristiques de l'invention :
- l'installation comporte des moyens d'impression de marques d'indexation sur la feuille de base selon un pas correspondant au pas d'avancement de la bande continue dans les moyens de thermoformage et des moyens de détection desdites marques pour caler l'indexation de ladite bande continue et centrer les tampons par rapport aux moyens de thermoformage,
- les moyens d'espacement transversal des bandes longitudinales sont formés par un déviateur à 90°,
- les moyens d'espacement longitudinal des tampons sont formés par un premier système de transport disposé en amont des moyens de découpage transversal des bandes longitudinales et par un second système de transport disposé en aval desdits moyens de découpage, la vitesse de déplacement du second système de transport étant supérieure à la vitesse de déplacement du premier système de transport pour déposer les tampons sur la feuille de base selon des intervalles déterminés correspondant aux empreintes des moyens de thermoformage,
- les moyens de collage comprennent des pistolets de projection de points de colle sur la feuille de base selon des lignes discontinues, parallèles et espacées à des intervalles sensiblement égaux à l'espacement des bandes longitudinales et sur des longueurs sensiblement égales aux longueurs des tampons, lesdits pistolets de projection étant associés à des organes de détection de la présence des tampons,
- les moyens de pose du film de couverture sont formés par une extrudeuse ou une unité de contre-collage à chaud.
- les moyens de perforation du film de couverture sont situés en aval des moyens de pose dudit film de couverture par rapport au sens de défilement de la bande continue,
- les moyens de perforation du film de couverture sont intégrés aux moyens de thermoformage des barquettes,
- les moyens de perforation du film de couverture sont intégrés aux moyens de découpage des barquettes.
D'autres caractéristiques et avantages de la présente invention apparaîtront au cours de la description qui va suivre, donnée uniquement à titre d'exemple et faite en référence aux dessins annexés, sur lesquels :
- la Fig. 1 est une vue de dessus d'une barquette pour le conditionnement de produits alimentaires, selon la présente invention,
- la Fig. 2 est une vue partielle en coupe selon la ligne 2-2 de la Fig.1,
- la Fig. 3 est une vue schématique de dessus de l'installation selon la présente invention,
- la Fig. 4 est une vue en élévation de l'installation selon la présente invention,
- la Fig. 5 est une vue de côté de l'installation selon la présente invention.

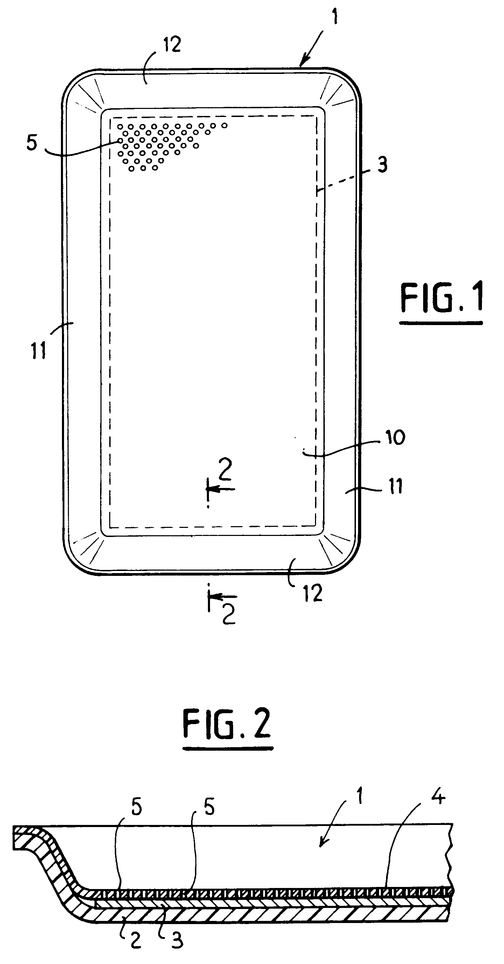

Sur les Figs. 1 et 2, on a représenté une barquette désignée dans son ensemble par la référence 1 et destinée au conditionnement, au transport et à la présentation de produits alimentaires rejetant du liquide, comme par exemple de la viande, du poisson ou de la volaille.

La barquette 1 est obtenue par thermoformage à partir d'une bande continue et comprend au moins une feuille de base 2 en matière plastique comme par exemple en polystyrène, un tampon 3 en matériau absorbant, comme par exemple en ouate et au moins un film de couverture 4 en matière plastique comme par exemple en polystyrène (Fig. 2).

Cette barquette 1 comprend une paroi de fond 10, des bords latéraux 11 et des bords latéraux transversaux 12.

Le tampon 3 en matériau absorbant est inséré entre la feuille de base 2 et le film de couverture 4 et a des dimensions sensiblement égales à la paroi de fond 10 de la barquette 1 si bien que les bords latéraux 11 et les bords latéraux transversaux 12 comportent uniquement la feuille de base 2 et le film de couverture 4.

Ainsi, la feuille de base 2 et le film de couverture 4 restent parfaitement soudés au moment du thermoformage sur tout le pourtour de la barquette 1 de façon à réaliser une étanchéité continue entre le tampon 3 et l'extérieur de la barquette 1.

Enfin, le film de couverture comporte, au niveau de la paroi de fond 10, une multitude de micro-perforations 5.

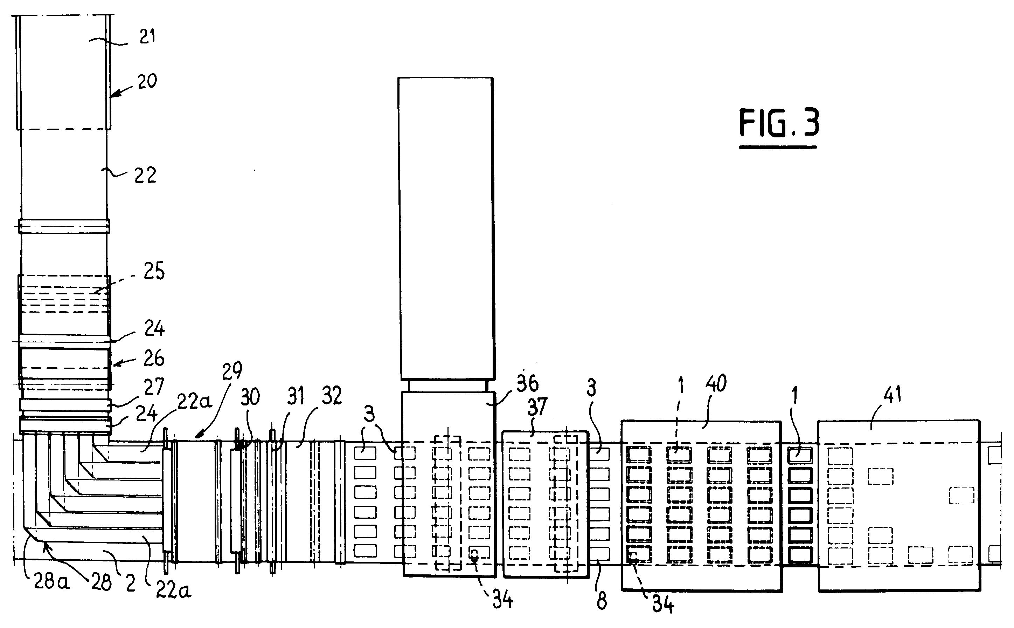

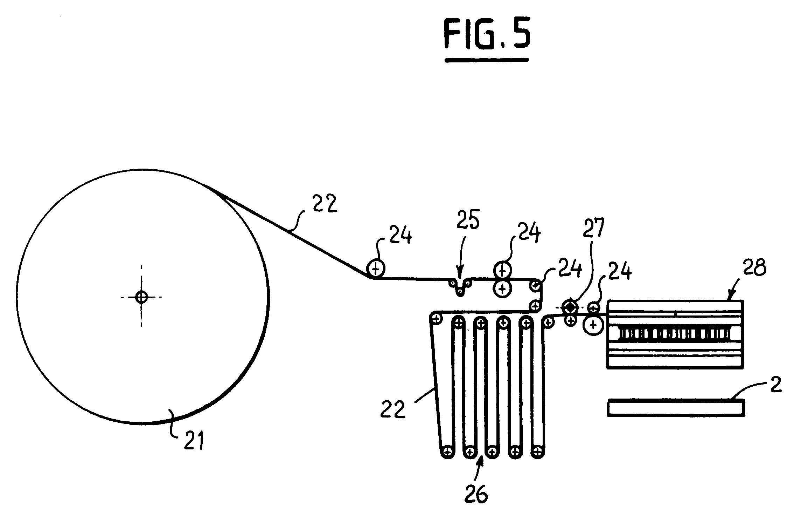

L'installation représentée sur les Figs. 3 à 5 de fabrication en continu des barquettes 1 comprend un dévidoir 20 d'une bobine 21 d'un ruban continu 22 par exemple de ouate et une unité de production, non représentée, de la feuille de base 2.

Le ruban continu 22 est déroulé et passe dans une série de rouleaux 24 de guidage et d'entraînement dont plusieurs sont motorisés, dans un système 25 de mesure de la tension du ruban, puis dans un accumulateur à rouleaux 26.

A la sortie de l'accumulateur à rouleaux 26, le ruban 22 est dirigé vers un système de découpe 27 formé par exemple par des couteaux ou des disques coupants, dans lequel ledit ruban est coupé longitudinalement en bandes 22a parallèles et d'égale largeur par exemple au nombre de six.

Le dévidoir 20 est par exemple positionné perpendiculairement par rapport à l'axe central de l'installation et par rapport à l'unité de production de la feuille de base 2.

Après découpe longitudinale 22, les bandes 22a en ouate sont déviées de 90° par un déviateur 28.

Ce déviateur 28 comporte, de manière classique, des barres de déviation 28a (Fig. 3) dont l'espacement est déterminé pour donner la séparation recherchée des bandes longitudinales 22a. Cet espacement des bandes dépend de la distance entre deux rangées d'empreintes des moyens de thermoformage qui seront décrits ultérieurement.

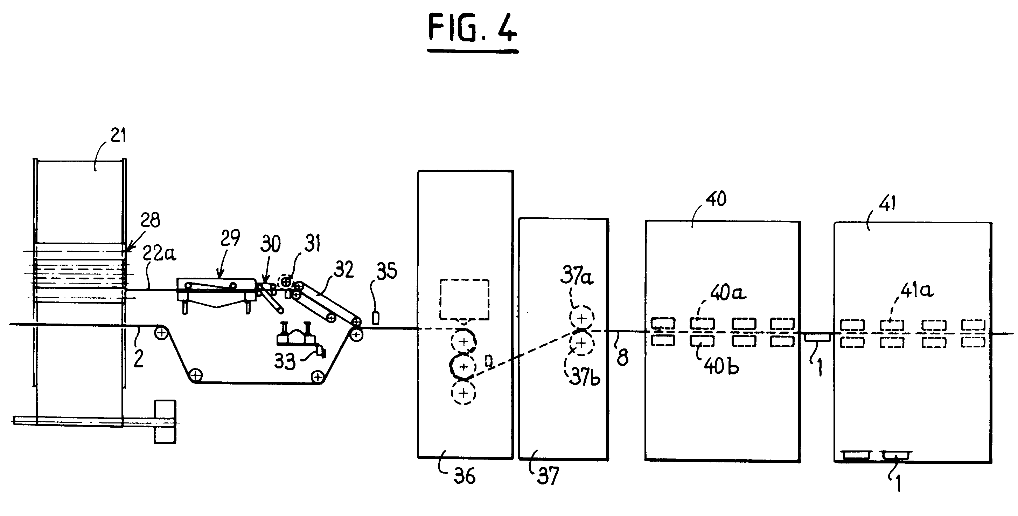

Ensuite, les bandes longitudinales 22a sont introduites tout d'abord dans un mécanisme de guidage 29 réglable (Figs. 3 et 4) qui permet de séparer et de guider chaque bande 22a afin d'obtenir les valeurs d'espacement et de largeur recherchée. Ce mécanisme 29 guide les bandes 22a dans des rouleaux 30 d'alimentation motorisés.

Ces rouleaux 30 motorisés et asservis introduisent les bandes 22a dans un système 31 de découpe transversal, lui même asservi auxdits rouleaux 30.

Le système 31 de découpe transversale constitué par exemple par des couteaux, permet de découper les bandes 22a en tampons 3 d'égale longueur et de dimensions sensiblement égales à la paroi de fond 10 des barquettes 1.

Après que les tampons 3 sont découpés, ils sont positionnés à intervalles réguliers et définis dans un tapis transporteur 32.

Cet intervalle d'espacement correspond aux empreintes des moyens de thermoformage et est donné par la différence de vitesse entre les rouleaux 30 et le tapis transporteur 32, la vitesse de déplacement du tapis transporteur 32 étant supérieure à la vitesse de rotation des rouleaux 30.

Les tampons 3 ainsi découpés et espacés sont maintenus dans le tapis transporteur 32 par un système à vide.

Les tampons 3 sont ensuite transportés jusqu'à la feuille de base 2 qui se déplace au-dessous des bandes 22a en ouate.

En amont de la ligne où les tampons 3 prennent contact avec la feuille de base 2, des points de colle sont projetés par l'intermédiaire de pistolets 33 sur ladite feuille. Ces pistolets 33 sont, par exemple au nombre de six, disposés parallèlement les uns par rapport aux autres.

Ainsi, les points de colle sont projetés sur la feuille de base 2 selon des lignes discontinues, parallèles et espacées à des intervalles sensiblement égaux à l'espacement des bandes longitudinales 22a et sur des longueurs sensiblement égales aux longueurs des tampons 3. Les pistolets de projection 33 sont associés à des cellules de détection, non représentées, de la présence des tampons 3 et de contrôle de la séquence de tir desdits pistolets.

Une marque d'indexation 34 (Fig. 3) est imprimée par des moyens d'impression 35 appropriés (Fig. 4) sur la feuille de base 2, selon un pas correspondant au pas d'avancement de ladite feuille 2 dans les moyens de thermoformage.

Ensuite, le film de couverture 4 est posé par des moyens 36 sur toute la surface de la feuille de base 2, y compris les tampons 3, de façon à constituer une bande continue 8 comprenant la feuille de base 2, les tampons 3 régulièrement espacés et le film de couverture 4.

Les moyens de posé sont formés par une extrudeuse 36 ou par une unité de contre-collage à chaud.

La bande continue 8 ainsi formée, passe dans des moyens de perforation 37 constitués par un rouleau 37a hérissé de pointes et un contre-rouleau 37b (Fig. 4) de façon à réaliser en continu sur le film de couverture 4 une multitude de micro-perforations.

A la sortie des moyens de perforation 37, la bande continue 8 passe dans des moyens de thermoformage 40 constitués notamment par une thermoformeuse qui comporte, de manière classique, une série d'empreintes mâles et femelles 40b animées d'un mouvement vertical alternatif capable de former simultanément sur ladite bande 8 plusieurs barquettes 1.

Ces moyens de thermoformage 40 sont équipés de moyens de détection, non représentés, des marques d'indexation 34 pour caler la bande continue 8 et centrer les tampons 3 par rapport aux empreintes 40a et 40b de telle sorte que lesdits tampons soient disposés uniquement sur la paroi de fond 10 de chaque barquette 1.

Ensuite, la bande continue 8 dans laquelle les barquettes 1 ont été formées, est introduite dans des moyens de découpage 41 constitués, par exemple par une presse de découpe, comportant une série d'outils 41a animés d'un mouvement alternatif par exemple vertical.

Les barquettes 1 découpées de la bande continue 8 sont récupérées et stockées et les déchets de détourage formés uniquement par la feuille de base en polystyrène et le film de couverture de polystyrène peuvent être recyclés.

Selon une première variante, les moyens de perforation du film de couverture 4 peuvent être intégrés aux moyens de thermoformage des barquettes.

Selon une autre variante, les moyens de perforation du film de couverture 4 peuvent être intégrés aux moyens de découpage des barquettes.

Le procédé et l'installation selon la présente invention permettent de réaliser des barquettes pour le conditionnement, le transport et la présentation de produits alimentaires rejetant du liquide, comme par exemple de la viande, du poisson ou de la volaille qui présentent de nombreux avantages par rapport à l'art antérieur.

En effet, les tampons en matériau absorbant recouvrent uniquement la paroi de fond de la barquette si bien que les bords latéraux et les bords latéraux transversaux sont parfaitement soudés et étanches, empêchant ainsi le liquide de se répandre à l'extérieur de la barquette.

Compte tenu de l'absence du matériau absorbant sur les bords de la barquette, ces bords sont rigides et peuvent être étirés sans aucun problème au moment du thermoformage en fonction de la profondeur désirée de la barquette.

## Revendications

1. Procédé de fabrication de barquettes (1) pour le conditionnement de produits alimentaires rejetant du liquide, à partir d'une bande continue (8) comportant au moins une feuille de base (2) en matière plastique comme par exemple en polystyrène, des tampons (3) en matériau absorbant formés à partir d'un ruban continu (22) et posés sur la feuille de base (2) et au moins un film de couverture (4) en matière plastique comme par exemple en polystyrène, procédé dans lequel on forme par thermoformage dans ladite bande (8) les barquettes (1) et on découpe lesdites barquettes (1) comportant une paroi de fond (10), des bords latéraux (11) et des bords latéraux transversaux (12), caractérisé en ce que :
- on découpe le ruban (22) en matériau absorbant en bandes (22a) longitudinales et parallèles,
- on espace transversalement les bandes longitudinales (22a),
- on découpe transversalement lesdites bandes longitudinales (22a) pour former les tampons (3) dont les dimensions sont sensiblement égales à celles de la paroi de fond (10) des barquettes (1),
- on espace longitudinalement lesdits tampons (3),
- on colle sur la feuille de base (2) les tampons (3),
- on pose sur toute la surface de la feuille de base (2) munie des tampons (3) régulièrement espacés, le film de couverture (4) pour former la bande continue (8),
- on perfore le film de couverture (4),
- et on réalise le thermoformage et le découpage des barquettes (1).

2. Procédé selon la revendication 1, caractérisé en ce que l'on perfore le film de couverture (4) simultanément au thermoformage des barquettes (1).

3. Procédé selon la revendication 1, caractérisé en ce que l'on perfore le film de couverture (4) simultanément au découpage des barquettes (1).

4. Procédé selon la revendication 1, caractérisé en ce que l'on projette sur la feuille de base (2) des points de colle selon des lignes discontinues, parallèles et espacées à des intervalles sensiblement égaux à l'espacement des bandes longitudinales (22a) et sur des longueurs sensiblement égales aux longueurs des tampons (3).

5. Procédé selon la revendication 1, caractérisé en ce que l'on recycle les déchets de détourage de la bande continue (8) après découpage des barquettes (1).

6. Installation de fabrication de barquettes (1) pour la mise en oeuvre du procédé selon l'une quelconque des revendications 1 à 5, comprenant des moyens (40) de thermoformage et des moyens (41) de découpage des barquettes (1) dans une bande continue (8) comportant au moins une feuille de base (2) en matière plastique comme par exemple en polystyrène, des tampons (3) en matériau absorbant formés à partir d'un ruban continu (22) et posés sur la feuille de base (2) et au moins un film de couverture (4) en matière plastique comme par exemple en polystyrène, caractérisée en ce qu'elle comprend également :
- des moyens (27) de découpage du ruban (22) en matériau absorbant en bandes (22a) longitudinales et parallèles,
- des moyens (28) d'espacement transversal des bandes (22a) longitudinales,
- des moyens (31) de découpage transversal desdites bandes (22a) longitudinales pour former les tampons (3) de dimensions sensiblement égales à celles de la paroi de fond (10) des barquettes (1),
- des moyens (30, 32) d'espacement longitudinal desdits tampons,
- des moyens (33) de collage des tampons sur la feuille de base (2),
- des moyens (36) de pose sur toute la surface de la feuille de base (2) et des tampons (3) régulièrement espacés, du film de couverture (4) afin de former la bande continue (8),
- et des moyens (37) de perforation du film de couverture (4).

7. Installation selon la revendication 6, caractérisée en ce qu'elle comporte des moyens (35) d'impression de marques d'indexation (34) sur la feuille de base (2) selon un pas correspondant au pas d'avancement de la bande continue (8) dans les moyens (40) de thermoformage et des moyens de détection desdites marques (34) pour caler l'indexation de la bande continue (8) et centrer les tampons (3) par rapport aux moyens (40) de thermoformage.

8. Installation selon la revendication 6, caractérisée en ce que les moyens d'espacement transversal des bandes (22a) longitudinales sont formés par un déviateur à 90° (28, 28a).

9. Installation selon la revendication 6, caractérisée en ce que les moyens d'espacement longitudinal des tampons (3) sont formés par un premier système de transport (30) disposé en amont des moyens (31) de découpage transversal des bandes (22a) longitudinales et par un second système de transport (32) disposé en aval desdits moyens de découpage, la vitesse du second système de transport (32) étant supérieure à la vitesse du premier système de transport (30) pour déposer les tampons (3) sur la feuille de base (2) selon des intervalles déterminés correspondant aux empreintes des moyens (40) de thermoformage.

10. Installation selon la revendication 6, caractérisée en ce que les moyens de collage comprennent des pistolets (33) de projection de points de colle sur la feuille de base (2) selon des lignes discontinues, parallèles et espacées à des intervalles sensiblement égaux à l'espacement des bandes (22a) longitudinales et sur des longueurs sensiblement égales aux longueurs des tampons (3), lesdits pistolets (33) de projection étant associés à des cellules de détection de la présence des tampons (3).

11. Installation selon la revendication 6, caractérisée en ce que les moyens de pose du film de couverture (4) sont formées par une extrudeuse (36) ou une unité de contre-collage à chaud.

12. Installation selon la revendication 6, caractérisée en ce que les moyens (37) de perforation du film de couverture (4) sont situés en aval des moyens (36) de pose dudit film de couverture par rapport au sens de défilement de la bande continue (8).

13. Installation selon la revendication 6, caractérisée en ce que les moyens de perforation du film de couverture (4) sont intégrés aux moyens (40) de thermoformage des barquettes (1).

14. Installation selon la revendication 6, caractérisée en ce que les moyens de perforation du film de couverture (4) sont intégrés aux moyens (41) de découpage des barquettes (1).

## Claims

1. Manufacturing method for water-repellent trays (1)for packaging food products, from a continuous strip (8) comprising at least one base sheet (2) of plastic material such for example as polystyrene, pads (3) of absorbent material formed from a continuous ribbon (22) and placed on the base strip (2), and at least one covering film (4) of plastic material such for example as polystyrene, a method in which the trays (1) are formed by thermoforming in the said continuous strip (8) and the said trays (1) are cut out, comprising a base section (10), lateral edges (11) and transverse lateral edges (12), characterised in that:
- the ribbon (22) of absorbent material is cut into longitudinal and parallel bands (22a);
- the longitudinal bands (22a) are transversely spaced;
- the said longitudinal bands (22a) are cut transversely in order to form pads (3) whose dimensions are substantially equal to those of the base section (10) of the trays (1);
- the said pads (3) are spaced longitudinally;
- the pads (3) are glued to the base section (2);
- the covering film is placed over the entire surface of the base sheet (2) provided with the regularly-spaced pads (3), in order to form the continuous strip (8);
- the covering film (4) is perforated;
- and thermoforming and cutting of the trays (1) is effected.

2. Method according to claim 1, characterised in that the covering film (4) is perforated simultaneously with thermoforming of the trays (1).

3. Method according to claim 1, characterised in that the covering film (4) is perforated simultaneously with the cutting out of the trays (1).

4. Method according to claim 1, characterised in that spots of glue are projected on to the base sheet (2) in discontinuous lines which are parallel and spaced at intervals substantially equal to the spacing of the longitudinal strips (22a) and at lengths substantially equal to the lengths of the pads (3).

5. Method according to claim 1, characterised in that the off-cuts of the continuous strip (8) are recycled after the trays (1) are cut out.

6. Installation for manufacturing trays (1) for putting into effect the method according to any one of claims 1 to 5, comprising thermoforming means (40) and cutting means (41) for the trays (1) from a continuous strip (8) comprising at least one base sheet (2) of plastic material such for example as polystyrene, pads (3) of absorbent material formed from a continuous ribbon (22) and placed on the base sheet (2), and at least one covering film (4) of plastic material such for example as polystyrene, characterised in that it likewise comprises:
- means (27) for cutting out the ribbon of absorbent material into longitudinal and parallel bands (22a);
- means (28) of transversely spacing the longitudinal bands (22a);
- means (31) of cutting out transversely the said longitudinal bands (22a) in order to form pads (3) of dimensions substantially equal to those of the base section (10) of the trays (1);
- means (30, 32) of longitudinally spacing said pads;
- means (33) of gluing the pads on to the base sheet (2);
- means (36) of placing over the entire surface area of the base sheet (2), and of the regularly-spaced pads, the covering film (4), in order to form the continuous strip (8);
- and means (37) of perforating the covering film (4).

7. Installation according to claim 6, characterised in that it comprises means (35) of printing indexing marks (34) on the base sheet (2) at a rate corresponding to the feed rate of the continuous strip (8) in the thermoforming means (40), and means of detecting the said marks (34) in order to secure indexation of the said continuous strip (8) and to centre the pads (3) relative to the thermoforming means (40).

8. Installation according to claim 6, characterised in that the means of transversely spacing the longitudinal strips (22a) are formed by a 90° deflector (28, 28a).

9. Installation according to claim 6, characterised in that the means of longitudinally spacing the pads (3) are formed by a first transport system (30) disposed upstream of the transverse cutting means (31) for the longitudinal strips (22a), and by a second transport system (32) disposed downstream of the said cutting means, the speed of displacement of the second transport system (32) being greater than the speed of the first transport system (30) in order to place the pads (3) on the base sheet (2) at determined intervals corresponding to the shapes produced by the thermoforming means (40).

10. Installation according to claim 6, characterised in that the gluing means comprise pistols (33) for projecting dots of glue on the base sheet (2) in discontinuous parallel lines spaced at intervals substantially equal to the spacing of the longitudinal strips (22a), and at lengths substantially equal to the lengths of the pads (3), said projecting pistols (33) being associated with cells for detecting the presence of the pads (3).

11. Installation according to claim 6, characterised in that the means of placing the covering film (4) are formed by an extruder (36) or a hot-pasting unit.

12. Installation according to claim 6, characterised in that the means (37) of perforating the covering film (4) are situated downstream of the means (36) of placing the said covering film relative to the direction of travel of the continuous strip (8).

13. Installation according to claim 6, characterised in that the means of perforating the covering film (4) are integrated with the thermoforming means (40) for the trays (1).

14. Installation according to claim 6, characterised in that the means of perforating the covering film (4) are integrated with the means (41) of cutting out the trays (1).

## Patentansprüche

1. Verfahren zum Herstellen von Schalen (1) für die Aufbewahren von Lebensmitteln, die Flüssigkeit absondern, ausgehend von einem kontinuierlichen Band (8), das wenigstens eine Basisfolie (2) aus Kunststoffmaterial wie beispielsweise Polystyrol, Dämpferelemente (3) aus absorbierendem Material, die aus einem kontinuierlichen Streifen (22) gebildet und auf die Basisfolie (2) gelegt sind, und wenigstens einen Abdeckfilm (4) aus Kunststoffmaterial wie beispielsweise Polystyrol enthält, wobei in dem Verfahren durch Wärmeformung die Schalen (1) im Band (8) gebildet werden und die Schalen (1), die eine Bodenwand (10), Seitenränder (11) und transversale Seitenränder (12) enthalten, ausgeschnitten werden, dadurch gekennzeichnet, daß:
- der Streifen (22) aus absorbierendem Material in longitudinale und parallele Bänder (22a) geschnitten wird,
- die longitudinalen Bänder (22a) transversal beabstandet angeordnet werden,
- die longitudinalen Bänder (22a) transversal zerschnitten werden, um die Dämpferelemente (3) zu bilden, deren Abmessungen im wesentlichen gleich denen der Bodenwand (10) der Schalen (1) sind,
- die Dämpferelemente (3) longitudinal beabstandet angeordnet werden,
- auf die Basisfolie (2) die Dämpferelemente (3) geklebt werden,
- auf die gesamte Oberfläche der mit den regelmäßig beabstandeten Dämpferelementen (3) versehenen Basisfolie (2) der Abdeckfilm (4) gelegt wird, um das kontinuierliche Band (8) zu bilden,
- der Abdeckfilm (4) perforiert wird,
- und die Wärmeformung und das Zerschneiden der Schalen (1) ausgeführt wird.

2. Verfahren nach Anspruch 1, dadurch gekennzeichnet, daß der Abdeckfilm (4) gleichzeitig mit der Wärmeformung der Schalen (1) perforiert wird.

3. Verfahren nach Anspruch 1, dadurch gekennzeichnet, daß der Abdeckfilm (4) gleichzeitig mit dem Ausschneiden der Schalen (1) perforiert wird.

4. Verfahren nach Anspruch 1, dadurch gekennzeichnet, daß auf die Basisfolie (2) längs unterbrochener Linien, die parallel und um Intervalle beabstandet sind, die im wesentlichen gleich dem Zwischenraum der longitudinalen Bänder (22a) sind, und auf Längen, die im wesentlichen gleich den Längen der Dämpferelemente (3) sind, Klebstoffpunkte gespritzt werden.

5. Verfahren nach Anspruch 1, dadurch gekennzeichnet, daß die Verschnittabfälle des kontinuierlichen Bandes (8) nach dem Ausschneiden der Schalen (1) wiederverwendet werden.

6. Anlage zur Herstellung von Schalen (1) für die Ausführung des Verfahrens nach irgendeinem der Ansprüche 1 bis 5, mit Mitteln (40) zum Wärmeformen und Mitteln (41) zum Ausschneiden der Schalen (1) aus einem kontinuierlichen Band (8), das wenigstens eine Basisfolie (2) aus Kunststoffmaterial wie beispielsweise Polystyrol, Dämpferelemente (3) aus absorbierendem Material, die aus einem kontinuierlichen Streifen (22) gebildet und auf die Basisfolie (2) gelegt sind, und wenigstens einen Abdeckfilm (4) aus Kunststoffmaterial wie beispielsweise Polystyrol enthält, dadurch gekennzeichnet, daß sie außerdem enthält:
- Mittel (27) zum Zerschneiden des Streifens (22) aus absorbierendem Material in longitudinale und parallele Bänder (22a),
- Mittel (28) für die transversal beabstandete Anordnung der longitudinalen Bänder (22a),
- Mittel (31) zum transversalen Zerschneiden der longitudinalen Bänder (22a), um die Dämpferelemente (3) mit Abmessungen zu bilden, die im wesentlichen gleich denen der Bodenwand (10) der Schalen (1) ist,
- Mittel (30, 32) für die longitudinal beabstandete Anordnung der Dämpferelemente,
- Mittel (33) zum Kleben der Dämpferelemente auf die Basisfolie (2),
- Mittel (36) zum Legen eines Abdeckfilms (4) auf die gesamte Oberfläche der Basisfolie (2) und der regelmäßig beabstandeten Dämpferelemente (3), um das kontinuierliche Band (8) zu bilden,
- und Mittel (37) zum Perforieren des Abdeckfilms (4).

7. Anlage nach Anspruch 6, dadurch gekennzeichnet, daß sie Mittel (35) zum Drucken von Kennzeichnungsmarkierungen (34) auf die Basisfolie (2) in einer Schrittweite, die der Schrittweite der Vorwärtsbewegung des kontinuierlichen Bandes (8) in den Mitteln (40) zur Wärmeformung entspricht, und Mittel für die Erfassung der Markierungen (34) enthält, um die Kennzeichnung des kontinuierlichen Bandes (8) zu synchronisieren und die Dämpferelemente (3) in bezug auf die Wärmeformungsmittel (40) zu zentrieren.

8. Anlage nach Anspruch 6, dadurch gekennzeichnet, daß die Mittel zum transversal beabstandeten Anordnen der longitudinalen Bänder (22a) durch einen 90°-Ablenker (28, 28a) gebildet sind.

9. Anlage nach Anspruch 6, dadurch gekennzeichnet, daß die Mittel zum longitudinal beabstandeten Anordnen der Dämpferelemente (3) durch ein erstes Transportsystem (30), das vor den Mitteln (31) zum transversalen Zerschneiden der longitudinalen Bänder (22a) sowie durch ein zweites Transportsystem (32) gebildet sind, das hinter den Mitteln zum Zerschneiden angeordnet sind, wobei die Geschwindigkeit des zweiten Transportsystems (32) größer als die Geschwindigkeit des ersten Transportsystems (30) ist, um die Dämpferelemente (3) auf der Basisfolie (2) in Intervallen abzulegen, die entsprechend den Eindrücken der Wärmeformungsmittel (40) bestimmt werden.

10. Anlage nach Anspruch 6, dadurch gekennzeichnet, daß die Klebemittel Pistolen (33) sind zum Spritzen von Klebstoffpunkten auf die Basisfolie (2) längs unterbrochener Linien, die parallel und um Intervalle beabstandet sind, die im wesentlichen gleich dem Zwischenraum der longitudinalen Bänder (22a) sind, und auf Längen, die gleich den Längen der Dämpferelemente (3) sind, wobei die Spritzpistolen (33) den Zellen zur Erfassung des Vorhandenseins der Dämpferelemente (3) zugeordnet sind.

11. Anlage nach Anspruch 6, dadurch gekennzeichnet, daß die Mittel zum Ablegen des Abdeckfilms (4) durch eine Strangpreßvorrichtung (36) oder eine Wärmegegenklebeeinheit gebildet sind.

12. Anlage nach Anspruch 6, dadurch gekennzeichnet, daß die Mittel (37) zum Perforieren des Abdeckfilms (4) sich in bezug auf die Richtung der Vorbeibewegung des kontinuierlichen Bandes (8) hinter den Mitteln (36) zum Ablegen des Abdeckfilms befinden.

13. Anlage nach Anspruch 6, dadurch gekennzeichnet, daß die Mitteln zum Perforieren des Abdeckfilms (4) in die Mittel (40) zum Wärmeformen der Schalen (1) integriert sind.

14. Anlage nach Anspruch 6, dadurch gekennzeichnet, daß die Mittel zum Perforieren des Abdeckfilms (4) in die Mittel (41) zum Zerschneiden der Schalen (1) integriert sind.
